# EUROPEAN PATENT APPLICATION

(11) **EP 1 995 099 A1**
(43) Date of publication of application: **26.11.2008**
(21) Application number: 07425309.7
(22) Date of filing: 22.05.2007
(51) Int. Cl.: B60J 7/10, B62D 33/06

(54) **Roof for a vehicle**

(71) Applicant: DENSO THERMAL SYSTEMS S.p.A., 10046 Poirino (Torino) (IT)
(72) Inventor: Bruno, Rocco, 10046 Poirino (Torino) (IT)
(74) Representative: Marchitelli, Mauro

(57) **Abstract**

Roof (10) for a vehicle, in particular for an agricultural vehicle, comprising a body (12) of plastic material bearing at least one electric device connected to an electric power supply system by means of a harness (30), said body (12) being fixed to a support structure in correspondence with fastening zones (14).

## Description

The present invention relates to a roof for a vehicle, in particular for an agricultural vehicle, comprising a body of plastic material bearing at least one electric device linked to an electric power supply system by means of a harness, said body being fixed to a support structure in correspondence with fastening zones.

Roofs of vehicles of the type indicated above are typically used as covering elements for cabs of agricultural or similar vehicles. In recent years the number of electric devices associated to cabs of this type of vehicle has progressively increased. In particular, such devices may include an air conditioning system, a lighting system to provide both internal and external illumination, a sound diffusion system in association with a radio or with a hands-free telephone installation. These devices are increasingly frequently installed on the roof of these cabs which, as well as performing the typical covering function, forms also a support for these devices.

In the case in which the roof is made of plastic material, the harness to supply power to the electrical devices assembled on the roof requires a plurality of power supply cables and a plurality of cables for the earth connection. The harness for electric devices mounted on a roof of plastic material is thus more complex and expensive than the harness for devices assembled on metal structures in which, as is known, connection to earth is achieved by wiring a terminal of the electric device to the metal structure.

In order to overcome the above drawback, the subject of the present invention is a roof having the characteristics forming the subject of claim 1.

According to the present invention, the electric devices assembled on the roof are earthed in correspondence with the fastening zones of the roof to the support structures.

Thanks to the present invention, it is possible to simplify the harness of the electric devices assembled on the roof and to reduce the number and length of earth cables. A further peculiarity of the invention consists in the protection of the fastening zone from atmospheric agents, preserving it from the risk of oxidation. In addition, the present invention facilitates assembly of the roof to the support structure and simplifies testing the roof before it is assembled onto the cab.

Further characteristics and advantages of the invention will be clear from the description that follows, with reference to the attached drawings, provided by way of non-limiting example, in which:
- figure 1 is a diagrammatic plan view of a roof according to the invention,
- figure 2 is a perspective view at enlarged scale of the detail indicated by arrow II in figure 1, and
- figure 3 is an exploded perspective view of the detail of figure 2.

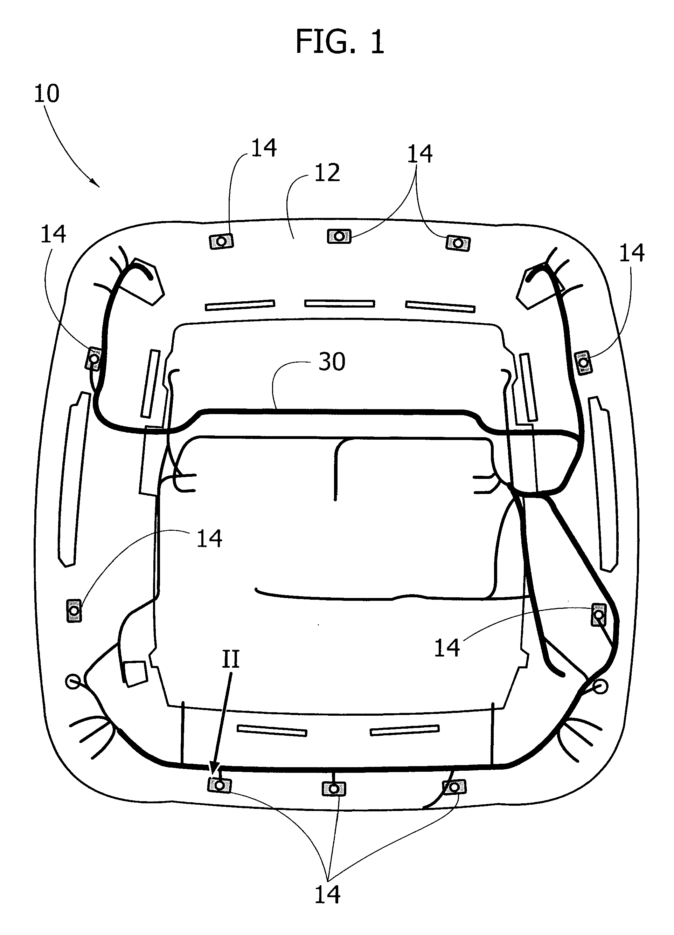

With reference to figure 1, reference number 10 indicates a roof according to the invention. The roof 10 comprises a body 12 obtained by injection moulding of plastic material.

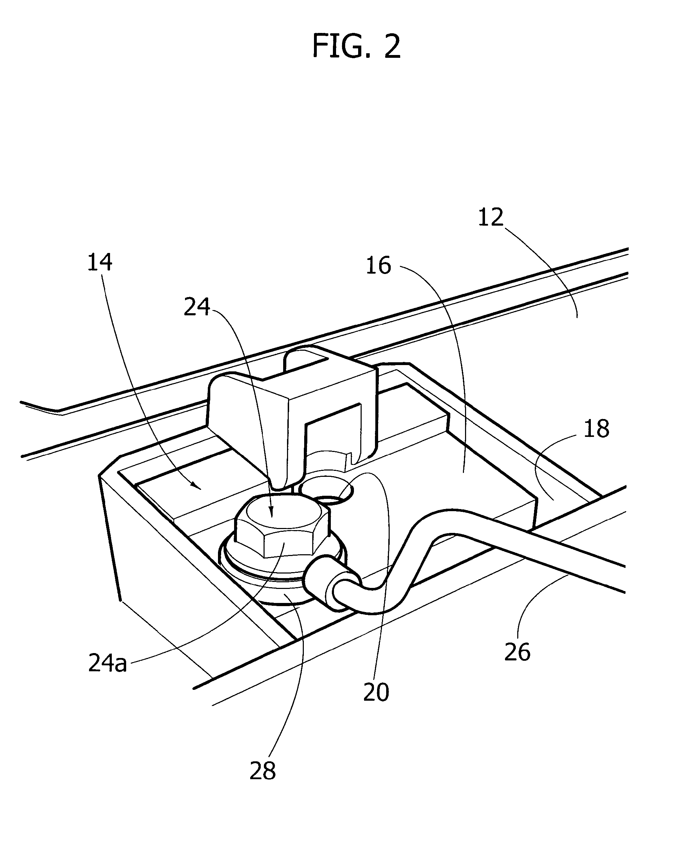

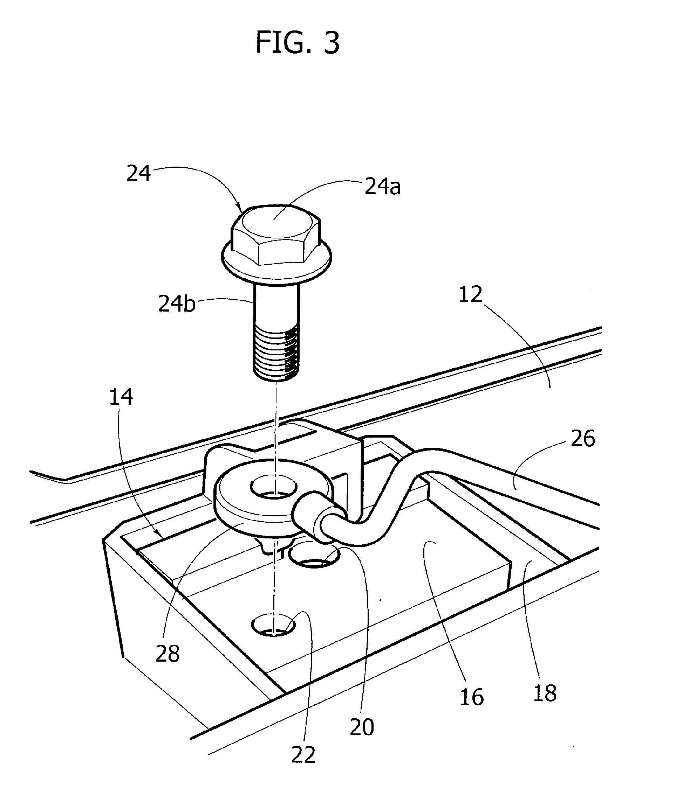

The body 12 is to be fastened to a support structure (not shown) of a cab of an agricultural vehicle, in correspondence with fastening zones 14. The fastening zones 14, according to the embodiment shown in figures 2 and 3, each include a metal block 16 housed in a respective seat 18 obtained in the body 12 of plastic material. Preferably, each block 16 presents at least two holes 20, 22.

A first hole 20 is destined to co-operate with a fastening element (not shown) that co-operates with an upright of the support structure.

The second hole 22 is engaged by a screw 24, or by a similar fastening element, having a head 24a and a threaded shank 24b.

The earthing of each electric device associated to the roof 10 is achieved through a respective electric cable 26 having a first extremity (not shown) wired to the electric device and a second extremity terminating with a metal ring 28 clamped between the metal block 16 and the head 24a of the screw 24, in such a manner as to make an electrical connection between the earth cable 26 and the metal block 16.

The electric devices housed in the roof 10 are supplied in a conventional way, that is through a harness 30 including a plurality of power supply cables connected to each electric device. On the contrary, the electric devices are earthed through cables 26 connected electrically to the metal blocks 16. Preferably, each device is earthed through its closest block 16.

Each metal block 16 constitutes a real earth point since it is connected, through the supporting structure (typically made of metal) to the chassis of the vehicle and thus to the negative pole of a battery.

The fastening zones 14 thus provide both the function of structural connection and the function of electrical connection. This configuration enables fastening of the roof and its harness to be simplified, at the same time reducing the number of cables for electrical connection of the devices. Furthermore, the fastening zone is protected from atmospheric agents and preserved from the risk of oxidation.

A further advantage consists in the ease with which a roof can be tested. A possible equipment predisposed for this purpose could, for example, comprise metal supports connected to earth and arranged in a similar manner to those of the support structure onto which the roof is destined to be assembled and on which the metal blocks 16 rest during testing of the electrical devices assembled on the roof.

## Claims

1. Roof for a vehicle, in particular for an agricultural vehicle, comprising a body (12) of plastic material bearing at least one electric device connected to a power supply system by means of a harness (30), said body (12) being fixed to a support structure in correspondence with fastening zones (14),
**characterised in that** said harness (30) comprises at least one electrical connection to earth (26) in correspondence with at least one of said fastening zones (14).

2. Roof according to claim 1, **characterised in that** it comprises a plurality of electric devices, each of which is earthed in correspondence with its nearest fastening zone (14).

3. Roof according to claim 1, **characterised in that** each fastening zone (14) comprises a metal block (16) fixed into a respective seat (18) of the body (12).

4. Roof according to claim 1, **characterised in that** the electrical connection to earth in the respective fastening zone (14) is obtained through a removable connecting element (24).

5. Roof according to claim 4, **characterised in that** the removable connecting element is a screw (24) that engages a metal ring (28) connected to a respective earth cable (26).
